# EUROPEAN PATENT APPLICATION

(11) **EP 4 686 134 A1**
(43) Date of publication of application: **28.01.2026**
(21) Application number: 25190153.4
(22) Date of filing: 17.07.2025
(51) Int. Cl.: H04L 5/00

(54) **DEVICE, METHOD, APPARATUS AND COMPUTER-READABLE MEDIUM FOR COMMUNICATION**

(30) Priority: 26.07.2024 CN 202411019591
(71) Applicant: Nokia Solutions and Networks Oy, 02610 Espoo (FI)
(72) Inventor: JIN, Hai Bo, Hangzhou (CN); KE, Bi Hui, Hangzhou (CN)
(74) Representative: Nokia EPO representatives

(57) **Abstract**

Embodiments of the present disclosure provide devices, methods, apparatus, and computer-readable media for communication. In the method, a network device monitors a change in a rank for a terminal device in a first carrier of the network device. Based on detecting a decrease in the rank, the network device transmits, to the terminal device, scheduling information for scheduling transmission of an aperiodic sounding reference signal (SRS) in the first carrier. The network device transmits, to the terminal device, first information for muting at least one predetermined symbol in an uplink slot in uplink scheduling of a second carrier of the network device, wherein the first carrier and the second carrier are used for uplink carrier aggregation for the terminal device.

## Description

### TECHNICAL FIELD

Various example embodiments relate to the field of communications, and in particular, to a device, a method, an apparatus, and a computer-readable media for communications.

### BACKGROUND

A communication network can be seen as a facility that enables communications between two or more communication devices, or provides communication devices with access to a data network. A mobile or wireless communication network is one example of a communication network.

Such communication networks operate in accordance with standards, such as those promulgated by Third Generation Partnership Project (3GPP) or European Telecommunications Standards Institute (ETSI). Examples of such standards include the so-called 5th generation (5G) standard, 6th generation (6G) standard or other standards promulgated by 3GPP.

### SUMMARY

In general, example embodiments of the present disclosure provide a technical solution for communication, in particular a technical solution for support of an aperiodic sounding reference signal in uplink carrier aggregation.

In a first aspect, a network device is provided. The network device includes at least one processor and at least one memory storing instructions that, when executed by the at least one processor, cause the network device at least to: monitor a change in a rank for a terminal device in a first carrier of the network device; based on detecting a decrease in the rank, transmit, to the terminal device, scheduling information for scheduling transmission of an aperiodic sounding reference signal (SRS) in the first carrier; and transmitting, to the terminal device, first information for muting at least one predetermined symbol in an uplink slot in uplink scheduling of a second carrier of the network device, wherein the first carrier and the second carrier are used for uplink carrier aggregation for the terminal device.

In a second aspect, a first network device is provided. A first network device includes at least one processor and at least one memory storing instructions that, when executed by the at least one processor, cause the first network device at least to: monitor a change in a rank for a terminal device in a first carrier of the first network device; based on detecting a decrease in the rank, transmit, to the terminal device, scheduling information for scheduling transmission of an aperiodic sounding reference signal (SRS) in the first carrier; and transmit a notification message of the decrease of the rank to the second network device, wherein a second carrier of the second network device and the first carrier are used for uplink carrier aggregation for the terminal device.

In a third aspect, a second network device is provided. The second network device includes at least one processor and at least one memory storing instructions that, when executed by the at least one processor, cause the second network device at least to: receive, from a first network device, a notification message of a decrease of a rank for a terminal device in a first carrier of the first network device; and based on receiving the notification message, transmit to the terminal device first information for muting at least one predetermined symbol in an uplink slot in an uplink scheduling of a second carrier of the second network device, wherein the second carrier is used for uplink carrier aggregation for the terminal device with the first carrier.

In a fourth aspect, a terminal device is provided. The terminal device comprises at least one processor and at least one memory storing instructions that, when executed by the at least one processor, cause the terminal device at least to: receive scheduling information for scheduling the transmission of an aperiodic sounding reference signal (SRS) in a first carrier; transmit the aperiodic SRS in the first carrier based on the scheduling information; receive first information for muting at least one predetermined symbol in an uplink slot in uplink scheduling of the second carrier, wherein the first carrier and the second carrier are used for uplink carrier aggregation for the terminal device; and based on the first information, muting the at least one predetermined symbol in the uplink slot in uplink scheduling of the second carrier.

In a fifth aspect, a method is provided. The method comprises: monitoring a change in a rank for a terminal device in a first carrier of a network device; based on detecting a decrease in the rank, transmit, to the terminal device, scheduling information for scheduling transmission of an aperiodic sounding reference signal (SRS) in the first carrier; and transmitting, to the terminal device, first information for muting at least one predetermined symbol in an uplink slot in uplink scheduling of a second carrier of the network device, wherein the first carrier and the second carrier are used for uplink carrier aggregation for the terminal device.

In a sixth aspect, a method is provided. The method comprises: monitoring a change in a rank for a terminal device in a first carrier of a first network device; based on detecting a decrease in the rank, transmit, to the terminal device, scheduling information for scheduling transmission of an aperiodic sounding reference signal (SRS) in the first carrier; and transmitting a notification message of the decrease in the rank to the second network device, wherein a second carrier of the second network device and the first carrier are used for uplink carrier aggregation for the terminal device.

In a seventh aspect, a method is provided. The method comprises: receiving, from a first network device, a notification message of a decrease in rank for a terminal device in a first carrier of the first network device; and based on receiving the notification message, transmitting, to the terminal device, first information for muting at least one predetermined symbol in an uplink slot in an uplink scheduling of a second carrier of the second network device, wherein the second carrier and the first carrier are used for uplink carrier aggregation for the terminal device.

In an eighth aspect, a method is provided. The method comprises: receiving scheduling information for scheduling transmission of an aperiodic sounding reference signal (SRS) in a first carrier; transmitting the aperiodic SRS in the first carrier based on the scheduling information; receiving first information for muting at least one predetermined symbol in an uplink slot in uplink scheduling of a second carrier, wherein the first carrier and the second carrier are used for uplink carrier aggregation for a terminal device; and based on the first information, muting the at least one predetermined symbol in the uplink slot in uplink scheduling of the second carrier.

In a ninth aspect, an apparatus is provided. The apparatus comprises: means for monitoring a change in a rank for a terminal device in a first carrier of a network device; means for transmitting, to the terminal device, scheduling information for scheduling transmission of an aperiodic sounding reference signal (SRS) in the first carrier based on detecting a decrease in the rank; and means for transmitting, to the terminal device, first information for muting at least one predetermined symbol in an uplink slot in uplink scheduling of a second carrier of the network device, wherein the first carrier and the second carrier are used for uplink carrier aggregation for the terminal device.

In a tenth aspect, an apparatus is provided. The apparatus comprises: means for monitoring a change in a rank for a terminal device in a first carrier of a first network device; means for transmitting, to the terminal device, scheduling information for scheduling transmission of an aperiodic sounding reference signal (SRS) in the first carrier based on detecting a decrease in the rank; and means for transmitting, to a second network device, a notification message of the decrease in the rank, wherein a second carrier of a second network device and the first carrier are used for uplink carrier aggregation for the terminal device.

In an eleventh aspect, an apparatus is provided. The apparatus comprises: means for receiving, from a first network device, a notification message of a decrease of a rank for a terminal device in a first carrier of the first network device; and means for transmitting, to the terminal device, first information for muting at least one predetermined symbol in an uplink slot in an uplink schedule of a second carrier of a second network device based on receiving the notification message, wherein the second carrier and the first carrier are used for uplink carrier aggregation for the terminal device.

In a twelfth aspect, an apparatus is provided. The apparatus comprises: means for receiving scheduling information for scheduling transmission of an aperiodic sounding reference signal (SRS) in a first carrier; means for transmitting the aperiodic SRS in the first carrier based on the scheduling information; means for receiving first information for muting at least one predetermined symbol in an uplink slot in uplink scheduling of a second carrier, wherein the first carrier and the second carrier are used for uplink carrier aggregation for a terminal device; and means for muting, based on the first information, the at least one predetermined symbol in the uplink slot in uplink scheduling of the second carrier.

In a thirteenth aspect, a computer-readable medium is provided. The computer-readable medium comprises program instructions stored thereon, the program instructions being for performing at least the method of the fifth aspect, the sixth aspect, the seventh aspect, or the eighth aspect.

In a fourteenth aspect, a computer program is provided. The computer program comprises instructions. The instructions when executed by an apparatus cause the apparatus to perform at least the method of the fifth aspect, the sixth aspect, the seventh aspect, or the eighth aspect.

In a fifteenth aspect, a network device is provided. The network device comprises: a monitoring circuitry configured to monitor a change in a rank for a terminal device in a first carrier of the network device; a first transmitting circuitry configured to transmit, to the terminal device, scheduling information for scheduling transmission of an aperiodic sounding reference signal (SRS) in the first carrier based on detecting a decrease in rank; and a second transmitting circuitry configured to transmit, to the terminal device, first information for muting at least one predetermined symbol in an uplink slot in uplink scheduling of a second carrier of the network device, wherein the first carrier and the second carrier are used for uplink carrier aggregation for the terminal device.

In a sixteenth aspect, a first network device is provided. The first network device comprises: a monitoring circuitry configured to monitor a change in a rank for a terminal device in a first carrier of the first network device; a first transmitting circuitry configured to transmit, to the terminal device, scheduling information for scheduling transmission of an aperiodic sounding reference signal (SRS) in the first carrier based on detecting a decrease in the rank; and a second transmitting circuitry configured to transmit a notification message of the decrease of the rank to a second network device, wherein a second carrier of the second network device and the first carrier are used for uplink carrier aggregation for the terminal device.

In a seventeenth aspect, a second network device is provided. The second network device includes: a receiving circuitry configured to receive, from a first network device, a notification message of a decrease of a rank for a terminal device in a first carrier of the first network device; and a transmitting circuitry configured to transmit, to the terminal device, first information for muting at least one predetermined symbol in an uplink slot in an uplink scheduling of a second carrier of the second network device based on receiving the notification message, wherein the second carrier and the first carrier are used for uplink carrier aggregation for the terminal device.

In an eighteenth aspect, a terminal device is provided. The terminal device comprises: a first receiving circuit configured to receive scheduling information for scheduling transmission of an aperiodic sounding reference signal (SRS) in a first carrier; a transmitting circuit configured to transmit the aperiodic SRS in the first carrier based on the scheduling information; a second receiving circuit configured to receive first information for muting at least one predetermined symbol in an uplink slot in uplink scheduling of a second carrier, wherein the first carrier and the second carrier are used for uplink carrier aggregation for the terminal device; and an execution circuitry configured to mute, based on the first information, the at least one predetermined symbol in the uplink slot in uplink scheduling of the second carrier.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, in which:
FIGS. 1A to 1B illustrate an example communication network in which embodiments of the present disclosure may be implemented;
FIG. 2 illustrates a signaling diagram illustrating an example communication process according to some example embodiments of the present disclosure;
FIG. 3 illustrates a signaling diagram illustrating an example communication process according to some example embodiments of the present disclosure;
FIGS. 4A through 4B illustrate schematic time-slot diagrams of a method for supporting an aperiodic sounding reference signal in uplink carrier aggregation, according to example embodiments of the present disclosure;
FIG. 5 illustrates a flowchart of an example method implemented at a network device according to some embodiments of the present disclosure;
FIG. 6 illustrates a flowchart of an example method implemented at a network device according to some embodiments of the present disclosure;
FIG. 7 illustrates a flowchart of an example method implemented at a network device according to some embodiments of the present disclosure;
FIG. 8 illustrates a flowchart of an example method implemented at a terminal device according to some embodiments of the present disclosure;
FIG. 9 illustrates a simplified block diagram of a device suitable for implementing some example embodiments of the present disclosure; and
FIG. 10 illustrates a block diagram of an example of a computer-readable medium according to some example embodiments of the present disclosure.

Throughout the drawings, the same or similar reference numerals represent the same or similar element.

### DETAILED DESCRIPTION

Principles of the present disclosure will now be described with reference to some example embodiments. It should be understood that these embodiments are described merely for the purpose of illustrating, and assisting those skilled in the art in understanding and realizing the present disclosure, without implying any limitation on the scope of the present disclosure. The disclosure described herein may be realized in various ways other than those described below.

In the following description and claims, unless otherwise defined, all technical terms used herein have the same meaning as commonly understood by those of ordinary skill in the art to which the present disclosure belongs.

References to "one embodiment", "an embodiment", "example embodiment", and the like in the present disclosure indicate that the described embodiments may include a particular feature, structure, or characteristic, but not every embodiment is necessarily to include that particular feature, structure, or characteristic. Furthermore, these phrases need not refer to the same embodiment. Furthermore, when a particular feature, structure, or characteristic is described in connection with an embodiment, it should be considered to be within the knowledge of a person skilled in the art, whether or not it is explicitly described, affecting that feature, structure, or characteristic in associated with other embodiments.

It should be understood that while the terms "first" and "second" and the like may be used to describe various elements, these elements should not be limited by these terms. These terms are only used to distinguish one element from another. For example, a first element may be referred to as a second element, and similarly, a second element may be referred to as a first element without departing from the scope of the example embodiments. The term "and/or" as used herein includes any and all combinations of one or more of the listed terms.

The terms used herein are for the purpose of describing particular embodiments only and are not intended to limit the example embodiments. As used herein, the singular forms "a," "an," and "the" are also intended to include the plural form unless the context clearly indicates otherwise. It should also be understood that the terms "comprises", "comprising", "has", "having", "includes" and/or "including", when used herein indicate the presence of the described feature, element and/or component, etc., but do not exclude the presence or addition of one or more other features, elements, components, and/or combinations thereof. As used herein, "at least one of the following items: <list of two or more elements>" and "at least one of the <list of two or more elements>" and similar wording (wherein the list of two or more elements consists of "and" or "or") refer to at least any one of the elements, or at least any two or more of the elements, or at least all of the elements.

As used in this application, the term "circuitry" may refer to one or more or all of the following:
(a) hardware-only circuit implementations (such as implementations in analog, digital and/or quantum circuitry) and
(b) combinations of hardware circuit(s) and software, such as (as applicable):
   (i) a combination of analog, digital and/or quantum hardware circuit(s) with software/firmware and
   (ii) any or all portions of hardware processor(s) (including digital and/or quantum processor(s)) with software, and memory(ies) that work together to cause an apparatus, such as a mobile device, computing device, or server, to perform various functions) and
(c) any or all portions of hardware circuit(s), such as a microprocessor(s), processor(s) and/or quantum processor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network that conforms to any appropriate communication standard, such as long-term evolution (LTE), LTE-advanced (LTE-A), wideband code division multiple access (WCDMA), high speed packet access (HSPA), narrowband internet of things (NB-loT), and the like. In addition, communication between terminal devices in the communication network and network devices may be performed according to any suitable generation of communication protocols, including but not limited to first generation (1G), second generation (2G), 2.5G, 2.75G, third generation (3G), fourth generation (4G), 4.5G, future fifth generation (5G) communication protocols, and/or any other currently known or future developed protocols. Embodiments of the present disclosure may be applied to a variety of communication systems. Given the rapid evolution of communications, there will certainly be future types of communication technologies and systems that may embody the present disclosure. The scope of the present disclosure should not be considered as being limited to the foregoing systems.

As used herein, the term "network device" refers to a node in a communication network through which a terminal device accesses the network and receives services from the network. Depending on the terminology and technology applied, a network device may refer to a base station (BS) or an access point (AP), e.g., a node B (NodeB or NB), an evolved node B (eNodeB or eNB), an NR NB (also known as a gNB), a remote radio unit (RRU), a radio head-end (RH), a remote radio head-end (RRH), a repeater, a low power node (e.g., a femto-node, a pico-node, etc.).

The term "terminal device" refers to any terminal device capable of wireless communication. By way of example and not limitation, a terminal device may also be referred to as a communication device, a user device, a user station, a portable user station, a mobile station, or an access terminal. Terminal devices may include, but are not limited to, mobile phones, cellular phones, smart phones, voice over IP (VoIP) phones, wireless local loop phones, tablets, wearable terminal devices, personal digital assistants (PDAs), portable computers, desktop computers, image capturing terminal devices (e.g., digital cameras), gaming terminal devices, music storage and playback devices, in-vehicle wireless terminal devices, wireless endpoints, mobile stations, laptop embedded equipment (LEE), laptop mounted equipment (LME), USB dongles, smart devices, wireless customer premises equipment (CPE), Internet of Things (IoT) devices, watches or other wearable devices, head-mounted displays (HMDs), vehicles, unmanned aerial vehicles, medical devices and applications (e.g., remote surgery), industrial devices and applications (e.g., robots and/or other wireless devices operating in industrial and/or automated processing chain environments), consumer electronic devices, devices operating over commercial and/or industrial wireless networks, and the like. In the following description, the terms "terminal device," "communication device," "terminal," "user equipment," and "UE" may be used interchangeably.

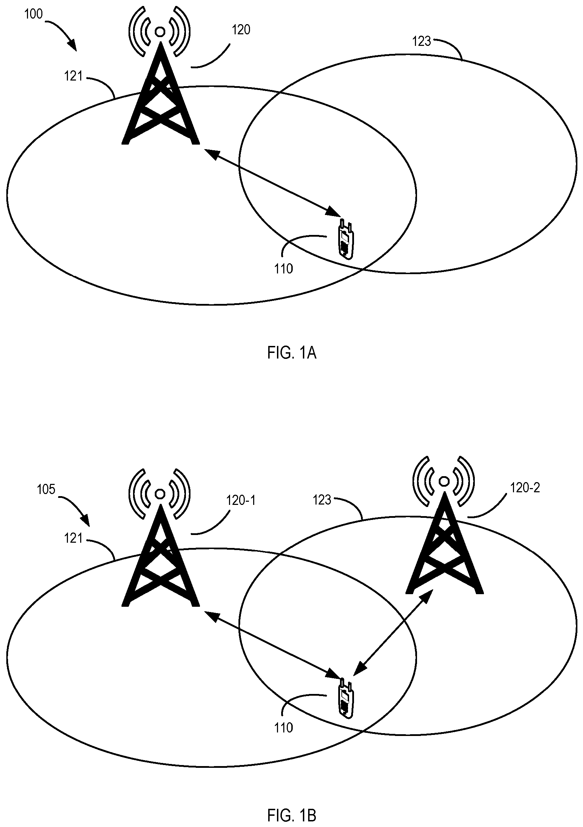

FIGS. 1A to 1B illustrate an example communication network in which embodiments of the present disclosure may be implemented. In FIG. 1A, a communication system 100 that is a part of the communication network includes a terminal device (UE) 110 and a network device 120. The terminal device 110 may be, for example, an loT device. The network device 120 may be, for example, a radio access network (RAN) device (as an example, such as an eNB in 4G, or a gNB in 5G), or a communication module thereof. The network device 120 has a first cell 121 on a first carrier 131 and provides communication services to the terminal device 110 in the cell 121. It should be understood that the network device 120 may provide one or more service cells.

As shown in FIG. 1A, the terminal device 110 is connected to the network device 120. In the system 100, the link from the network device 120 to the terminal device 110 is referred to as downlink (DL), while the link from the terminal device 110 to the network device 120 is referred to as uplink (UL). In the downlink, the network device 120 is a transmitting device (or transmitter) and the terminal device 110 is a receiving device (or receiver). In the uplink, the terminal device 110 is the transmitting device (or transmitter) and the network device 120 is the receiving device (or receiver).

In a carrier aggregation (CA) scenario, a plurality of carriers may be aggregated to provide services to a terminal device, such as the terminal device 110 shown in FIG. 1A. For example, in this case, for the terminal device 110, the first cell 121 may act as a primary cell (PCell) in the CA scenario, and one or more secondary cells (SCells) may be added as auxiliary service cells in the CA scenario for the terminal device 110. For simplicity, only a second cell 123 on a second carrier 133 provided by the network device 120 is shown in FIG. 1A. However, it should be noted that the second cell 123 may also be provided by another network device, as shown in FIG. 1B. In the communication system 105 shown in FIG. 1B, the first cell 121 is provided by the first network device 120-1 and the second cell 123 is provided by the second network device 120-2, and the first carrier 131 is aggregated with the second carrier 133 to provide a service to a terminal device (e.g., the terminal device 110 shown in FIG. 1B).

It should be understood that the number of devices (including the terminal device 110 and the network device 120) and their connectivity relationships and types illustrated in FIGS. 1A through 1B are only for the purpose of illustration and do not imply any limitations. The communication system 100 of FIG. 1A and the communication system 105 of FIG. 1B may include any suitable number of devices suitable for implementing embodiments of the present disclosure.

Carrier Aggregation (CA) is a technique used in wireless systems for aggregating multiple portions of a frequency band. For example, multiple component carriers (CCs), each of which occupies a specific bandwidth of the system bandwidth, can be aggregated for communication between a network device and a terminal device, often referred to as a user equipment (UE). In carrier aggregation, a carrier that carries the signaling and manages the other carriers is called the primary carrier (Pcell). The carrier that is used to extend the bandwidth to enhance the rate and can be decided by the primary carrier when to be added or removed is called a secondary carrier (Scell). Primary and secondary carriers are relative to terminals and can be different for different terminals.

In carrier aggregation, one of the current existing problems is that for both frequency division duplex (FDD) + time division duplex (TDD) frequency range 1 (FR1) scenarios and FDD+FDD scenarios, the current uplink carrier aggregation (UL CA) only supports two uplink component carriers (2CC), and each CC only supports one layer. Therefore, in the above scenarios, UL CA supports 2 layers in total.

Therefore, for a user equipment with 3 transmit radio frequency (RF) chains (Tx), the current FDD+TDD FR1 solution can be extended to support uplink 3Tx transmissions. Among other things, regardless of whether the TDD FR1 CC is a primary carrier or a secondary carrier, it shall support uplink rank 2 (multiple input multiple output MIMO is enabled), while the FDD CC shall support uplink rank 1. Compared to the conventional UL CA solutions, better throughput and frequency efficiency can be achieved since a total of 3 layers of uplink transmission are supported.

In such scenario, in order to support uplink MIMO for TDD FR1 CC, the aperiodic sounding reference signal (aperiodic SRS, A-SRS) may be supported in the carrier aggregation configuration. Since the limited resources for the periodic SRS , A-SRS is required to act as a reference signal transmitted from the terminal device to the network device to perform uplink signal measurements in the process of the rank changes, e.g., when decreasing from a high radio link quality (rank 2) to a low radio link quality (rank 1) and vice versa.

In general solutions, A-SRS is only supported in non-carrier aggregation scenarios with TDD single carrier, whereas not supported in UL CA scenarios with FDD+TDD FR1 or FDD+FDD. In view of this, some embodiments of the present disclosure enable the support for A-SRS in TDD FR1 CC, thereby enabling uplink MIMO with uplink carrier aggregation 2CC in the scenarios of UEs with 3TX.

Compared to the non-carrier aggregated single TDD carrier scenarios, the support for A-SRS in uplink carrier aggregation is more complex, since it requires to consider not only the behavior in the TDD FR1 component carriers, but also the scheduling and transmission in the FDD component carriers. To enable the A-SRS to be supported in TDD FR1 component carriers, at least the following two technical issues need to be addressed.

The first issue is that A-SRS transmissions cannot be performed simultaneously with PUCCH or PUSCH transmissions in the FDD CC for the terminal devices that do not support simultaneous transmission of SRS-PUCCH-PUSCH information elements. Another issue is that the power of the band combination of the uplink carrier aggregation satisfies a predetermined magnitude relationship with the power of the bands of the individual carriers, e.g., when the power of the of the UL CA band combination is less than that of in the FDD or TDD FR1 band +3db, there may exist a power limitation state if A-SRS in the TDD FR1 CC is scheduled simultaneously with PUSCH in the FDD CC, which may result in PUSCH uplink BLER issue, and A-SRS decoding failure.

Based on the above issues, some embodiments of the present disclosure introduce a plurality of mechanisms as follows. Firstly, a symbol muting mechanism is the introduced. For example, when an A-SRS transmission cannot be made simultaneously with a PUCCH or PUSCH transmission in the FDD CC, the symbols in the uplink slot in the FDD CC that overlap with the slot in which the A-SRS transmission is located should be muted. When the rank for TDD FR1 is recovered to 2, A-SRS is no longer required, thereby the FDD CC should resume normal scheduling without symbol muting.

Alternatively, another mechanism introduced is a synchronization mechanism. For example, A-SRS is triggered when the rank for the TDD FR1 CC changes from 2 to 1. The FDD CC is not aware of what is happening (such as the intention to trigger A-SRS in the TDD FR1 CC), and therefore the information for initiating or stopping the A-SRS scheduling should be notified by the TDD CC to the FDD CC.

Alternatively, the third mechanism introduced comprises configuring a scheduling suspension time mechanism. For example, to ensure that the FDD has sufficient time margin to mute the overlapped uplink symbols, the A-SRS scheduling suspension time should be configured, typically 5ms. This is to avoid a situation where some uplink slots have been authorized for scheduling while the FDD is receiving synchronization information.

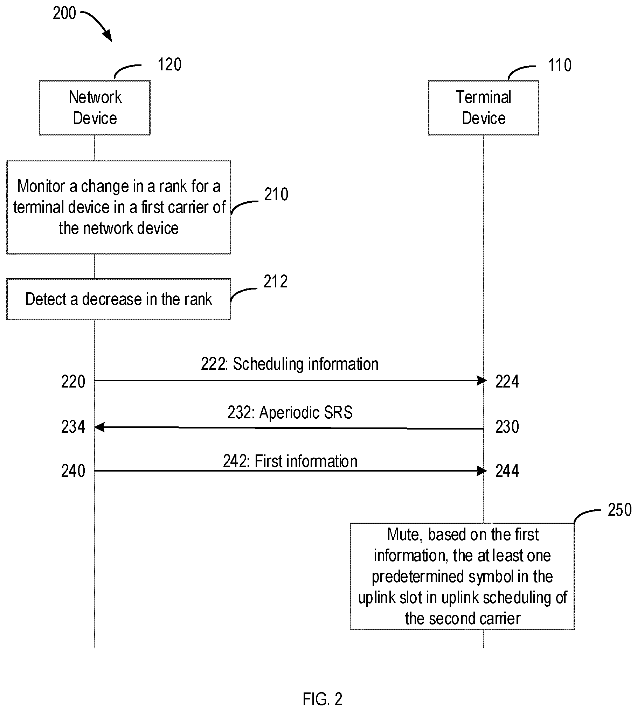

Through the above mechanism, A-SRS can be scheduled as a reference signal in TDD FR1 CC to monitor the uplink signal quality, so that the TDD FR1 CC uplink transmission can be resumed from rank 1 to rank 2 if possible, and at the same time, the FDD CC uplink transmission can be minimally affected, which is due to the fact that when the rank for the uplink transmission in the TDD FR1 CC is changed from 2 to 1, only the symbols (such as the last symbol, or the last 2 symbols) in the uplink slot in the FDD CC that overlap with the slot where the A-SRS transmissions are located are muted. When the uplink rank for the TDD FR1 CC is recovered to 2, the FDD CC can return to normal scheduling without symbol muting. Some embodiments of the present disclosure will be described in detail below with reference to FIGS. 2 through 10.

FIG. 2 illustrates a signaling diagram illustrating an example communication process 200 according to some example embodiments of the present disclosure. For the purposes of discussion, the communication process 200 will be described with reference to FIG. 1A. The communication process 200 may involve a terminal device (e.g., the terminal device 110 shown in FIG. 1A), and a network device (e.g., the network device 120 shown in FIG. 1A), and may also involve a component carrier (e.g., first carrier 131, and second carrier 133 shown in FIG. 1A). In the following, the communication process 200 will be described with reference to the terminal device 110, the network device 120, the first carrier 131, and the second carrier 133 shown in FIG. 1A. Among other things, the first carrier 131 includes a time division duplex (TDD) carrier, and the second carrier 133 includes a frequency division duplex (FDD) carrier. One of the first carrier 131 or the second carrier 133 corresponds to a primary cell of the terminal device, the other one of the first carrier or the second carrier corresponds to a secondary cell of the terminal device, and the terminal device has three transmit RF chains (Tx).

As shown in FIG. 2, at 210, the network device 120 monitors a change in a rank for the terminal device 110 in the first carrier 131 of the network device 120. Then, based on detecting a decrease of the rank at 212 (e.g., from rank 2 of a high radio link quality to rank 1 of a low radio link quality), at 220, the network device 120 transmits (222), to the terminal device 110, scheduling information for scheduling the transmission of an aperiodic sounding reference signal (SRS) in the first carrier 131.

In some embodiments, the decrease of the rank is detected based on the uplink transmission of the terminal device 110 in the first carrier 131. For example, the network device 120 may determine the decrease of the rank based on a decrease in the quality of the uplink transmissions of the terminal device 110 in the first carrier 131. In other embodiments, the network device 120 may also determine the decrease of the rank for the terminal device 110 in the first carrier 131 through other means. For example, the decrease of the rank can be determined based on a channel status information reported by the terminal device 110, and so forth.

At 224, the terminal device 110 receives this scheduling information and, based on the scheduling information, at 230, the terminal device 110 transmits (232) an aperiodic SRS to the network device 120.

Alternatively, in some embodiments, the network device 120 stops transmitting the scheduling information to the terminal device 110 based on detecting an increase of the rank (e.g., recovering from rank 1 of a low radio link quality to rank 2 of a high radio link quality).

In some embodiments, the decrease of the rank is detected based on the aperiodic SRS transmission of the terminal device 110 in the first carrier 131.

In this embodiment, based on detecting the rank change, a notification message of this rank change is transmitted, by a first unit of the network device 120 associated with the first carrier 131, to a second unit of the network device 120 associated with the second carrier 133. Since the second carrier 133 is not aware of what is happening at the first carrier 131 (e.g., the reason for triggering the aperiodic SRS), a notification message to start or stop the aperiodic SRS scheduling should be transmitted by the first carrier 131 to the second carrier 133.

At 240, the network device 120 transmits (242), to the terminal device 110, first information for muting at least one predetermined symbol in an uplink slot in uplink scheduling of the second carrier 133 of the network device 120, wherein the first carrier 131 and the second carrier 133 are used for uplink carrier aggregation for the terminal device 110.

At 244, the terminal device 110 receives the first information and, based on the first information, at 250, the terminal device 110 mutes the at least one predetermined symbol in the uplink slot in uplink scheduling of the second carrier 133 of the network device 120.

Alternatively, in some embodiments, based on detecting an increase of the rank, the network device 120 transmits, to the terminal device 110, second information for stopping muting the at least one predetermined symbol in the uplink slot in uplink scheduling of the second carrier 133. The terminal device stops muting the at least one predetermined symbol in the uplink slot in uplink scheduling of the second carrier 133 based on the received second information.

In some embodiments, the at least one predetermined symbol includes symbols (such as the last symbol, or the last 2 symbols of the uplink slot in the second carrier 133) that overlap with slots for transmissions of the aperiodic SRS in the first carrier 131.

In some embodiments, this scheduling information is transmitted after a predetermined time period following the determination of the decrease of the rank, e.g., the default value of this predetermined time period may be set to 5ms. In other embodiments, the default value of this predetermined time period may also be set to other reasonable values depending on the specific implementation environment.

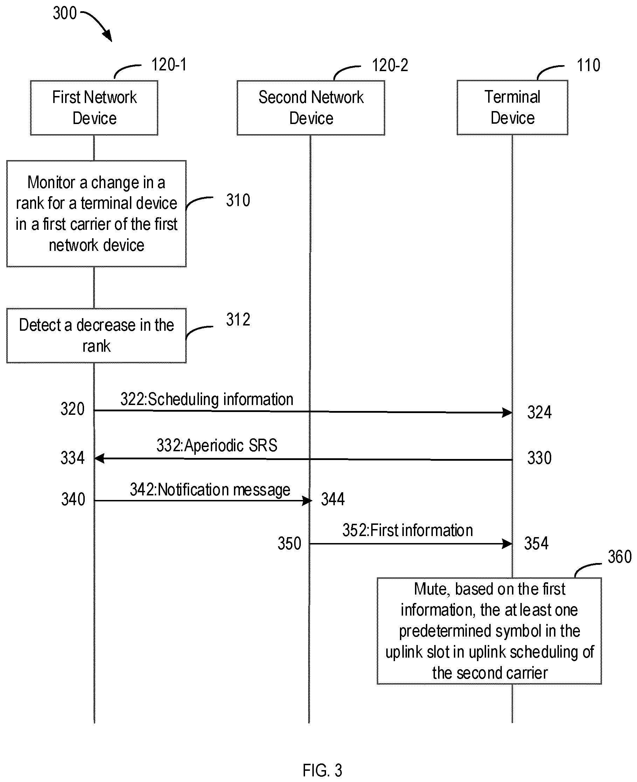

FIG. 3 illustrates a signaling diagram illustrating an example communication process 300 according to some example embodiments of the present disclosure. For purposes of discussion, the communication process 300 will be described with reference to FIG. 1B. The communication process 300 may involve a terminal device (e.g., the terminal device 110 shown in FIG. 1B), and a network device (e.g., the first network device 120-1, and the second network device 120-2 shown in FIG. 1B), and may also involve a component carrier (e.g., the first carrier 131, and the second carrier 133 shown in FIG. 1A). In the following, the communication process 300 will be described with reference to the terminal device 110, the first network device 120-1, the second network device 120-2, the first carrier 131, and the second carrier 133 shown in FIG. 1B. Among other things, the first carrier 131 includes a time division duplex (TDD) carrier, and the second carrier 133 includes a frequency division duplex (FDD) carrier. One of the first carrier 131 or the second carrier 133 corresponds to a primary cell of the terminal device, the other one of the first carrier or the second carrier corresponds to a secondary cell of the terminal device, and the terminal device has three transmit RF chains (Tx).

As shown in FIG. 3, at 310, the first network device 120-1 monitors a change in a rank for the terminal device 110 in the first carrier 131 of the first network device 120-1.

Then, based on detecting a decrease of the rank at 312 (e.g., from rank 2 of a high radio link quality to rank 1 of a low radio link quality), at 320, the first network device 120-1 transmits (322), to the terminal device 110, scheduling information for scheduling the transmission of the aperiodic sounding reference signal (SRS) in the first carrier 131.

In some embodiments, the decrease of the rank is detected based on the uplink transmission of the terminal device 110 in the first carrier 131.

At 324, the terminal device 110 receives the scheduling information and, based on the scheduling information, at 330, the terminal device 110 transmits (332) an aperiodic SRS to the first network device 120-1.

Alternatively, in some embodiments, the first network device 120-1 stops transmitting the scheduling information to the terminal device 110 based on detecting the increase of the rank.

In some embodiments, the decrease of the rank is detected based on the aperiodic SRS transmission by the terminal device 110 in the first carrier 131.

At 340, based on detecting the rank change, a notification message of the rank change is transmitted (342) by the first network device 120-1 to the second network device 120-2. Since the second carrier 133 of the second network device 120-2 is not aware of what is happening at the first carrier 131 of the first network device 120-1 (e.g., the reason for triggering the aperiodic SRS), the notification message for starting or stopping the aperiodic SRS scheduling should be transmitted by the first network device 120-1 to the second network device 120-2.

At 344, the notification message is received by the second network device 120-2 and, based on the received notification message, at 350, first information is transmitted (352) to the terminal device 110, the first information being used to mute predetermined symbols in an uplink slot in uplink scheduling of the second carrier 133 of the second network device 120-2, wherein the first carrier 131 and the second carrier 133 are used for uplink carrier aggregation for the terminal device 110.

At 354, the terminal device 110 receives the first information and, based on the first information, at 360, the terminal device 110 mutes the at least one predetermined symbol in the uplink slot in uplink scheduling of the second carrier 133 of the second network device 120-2.

Alternatively, in some embodiments, the first network device 120-1 transmits a notification message of the increase of the rank to the second network device 120-2 based on detecting the increase of the rank. Based on receiving the notification message, the second network device 120-2 transmits, to the terminal device 110, second information for stopping muting the at least one predetermined symbol in the uplink slot in uplink scheduling of the second carrier 133. The terminal device 110 stops muting the at least one predetermined symbol in the uplink slot of the second carrier 133 based on the received second information. Additionally, in this embodiment, the first network device 120-1 also stops transmitting scheduling information for scheduling an aperiodic SRS transmission to the terminal device 110 based on detecting the increase of the rank.

In some embodiments, the at least one predetermined symbol includes symbols (such as the last symbol, or the last 2 symbols of the uplink slot in the second carrier 133) that overlap with the slot of the aperiodic SRS transmission in the first carrier 131.

In some embodiments, this scheduling information is transmitted after a predetermined time period following the determination of the decrease of the rank, e.g., the predetermined time period is 5ms. In other embodiments, the default value of this predetermined time period may also be set to other reasonable values depending on the specific implementation environment.

The aperiodic SRS scheduling mechanism described in the embodiments of FIGS. 2 and 3 is applicable to the following example scenarios. For example, in one example scenario, the terminal device 110 does not support simultaneous transmission of SRS with a physical uplink control channel (PUCCH) or a physical uplink shared channel (PUSCH). In another example scenario, the power of the band combination for uplink carrier aggregation satisfies a predetermined magnitude relationship with the power of the bands of the first carrier 131 or the bands of the second carrier 133. For example, when the power of the uplink carrier aggregation band combination is less than that of either the first carrier 131 or the second carrier 133 band +3db, there may exist a power limitation if the aperiodic SRS in the first carrier 131 is simultaneously scheduled with a PUSCH in the second carrier 133, which would result in PUSCH uplink BLER issues, and A-SRS decoding failures.

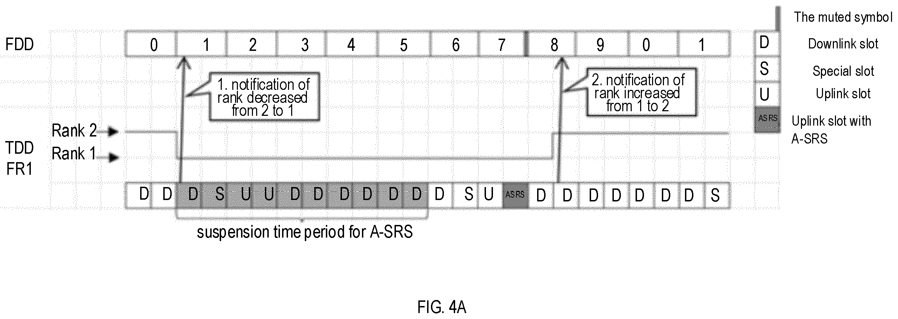

FIGS. 4A to 4B illustrate schematic time-slot diagrams of a method for supporting an aperiodic sounding reference signal in uplink carrier aggregation according to example embodiments of the present disclosure. As shown in FIG. 4A, when the TDD FR1 CC decreases from a high radio link quality (rank 2) to a low radio link quality (rank 1), the aperiodic SRS may be triggered in the last symbol of any uplink slot of the TDD CC. At this point, the FDD CC is not aware of what is happening at the TDD CC and maintains normal uplink scheduling and transmission. Therefore, at block 1, a notification message is introduced for notifying the FDD CC by the TDD CC of a change in the rank in the TDD CC, in order to prepare the FDD CC for the symbol muting in the upcoming slot when the rank in the TDD CC decreases. In addition, at block 2, the TDD CC also transmits a notification message to the FDD CC that the rank in the TDD CC has been increased from 1 to 2, in order to enable the FDD CC to resume normal scheduling of the entire uplink slot. In this way, the throughput of the FDD CC receives minimal impact because symbol muting occurs only when needed.

When receiving a notification that the rank for the TDD CC has been decreased, the FDD CC should mute predetermined symbols in the upcoming uplink slot, which is the symbol that overlaps with the slot of the A-SRS transmission in the TDD CC. In this way, the simultaneous transmission of symbol in the uplink slot of the FDD CC with the A-SRS in the TDD CC is avoided.

When the rank for the TDD CC is decreased and is about to trigger the A-SRS, the FDD CC may have already authorized the uplink transmission in an uplink slot that overlaps with the slot in which the A-SRS transmission was transmitted. In this case, it is prone to A-SRS and PUSCH/PUCCH decoding failures, and other unpredictable behavior. To address this issue, in this embodiment, a period of scheduling suspension time (e.g., 5ms) is configured prior to the A-SRS scheduling, as illustrated in FIG. 4A. During this scheduling suspension time, the A-SRS scheduling will be skipped and the TDD CC will perform the A-SRS transmission in the uplink slot after the scheduling suspension time has elapsed. This ensures that the FDD CC has sufficient time margin to eliminate symbols that overlap with the symbol of possible A-SRS transmission in the slot of the TDD CC.

It should be noted that in the case where the slot of the FDD carrier completely overlaps with the downlink slot of the TDD carrier (e.g., such as slots 4 and 5 of the FDD shown in Fig. 4A), it is not necessary to perform symbol muting, due to the fact that it is not possible to perform scheduling of the uplink aperiodic SRS in the downlink slot of the TDD carrier.

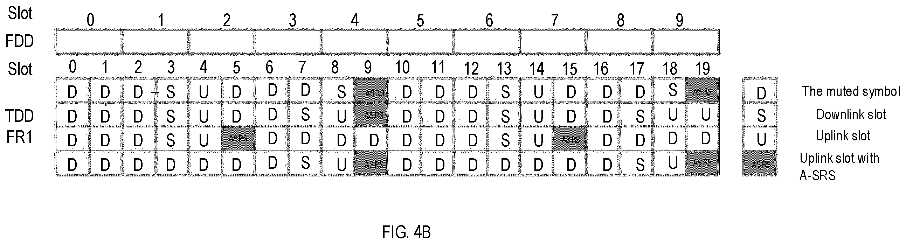

Theoretically, A-SRS can be triggered in any uplink slot of the TDD CC when the rank for the TDD CC decreases. In FIG. 4B, the uplink slot used for A-SRS transmission in the TDD CC overlaps with the latter half of the uplink slot in the FDD CC (i.e., A-SRS is scheduled in an odd number of uplink slots in the TDD CC). In this case, the FDD CC only needs to mute the predetermined number of last symbols (e.g., the last symbol, or the last 2 symbols) according to the used slot format.

In another embodiment, the uplink slot used for A-SRS transmission in the TDD CC may overlap with the front half of the uplink slot in the FDD CC in addition to the latter half of the uplink slots in the FDD CC as described in FIG. 4B (i.e., the A-SRS may be scheduled in an even number of uplink slots in the TDD CC). For the case where the uplink slot used for transmitting A-SRS in the TDD CC overlaps the front half of the uplink slot in the FDD CC, the entire uplink slot in the FDD CC will be muted. Although, compared to the embodiment depicted in FIG. 4B, the FDD uplink transmission and throughput will be more affected, it will help the uplink transmission of the TDD CC to recover faster from rank 1 to rank 2 (uplink MIMO transmission) due to the increased frequency of A-SRS scheduling (all uplink slots of the TDD CC can be used to implement A-SRS transmission).

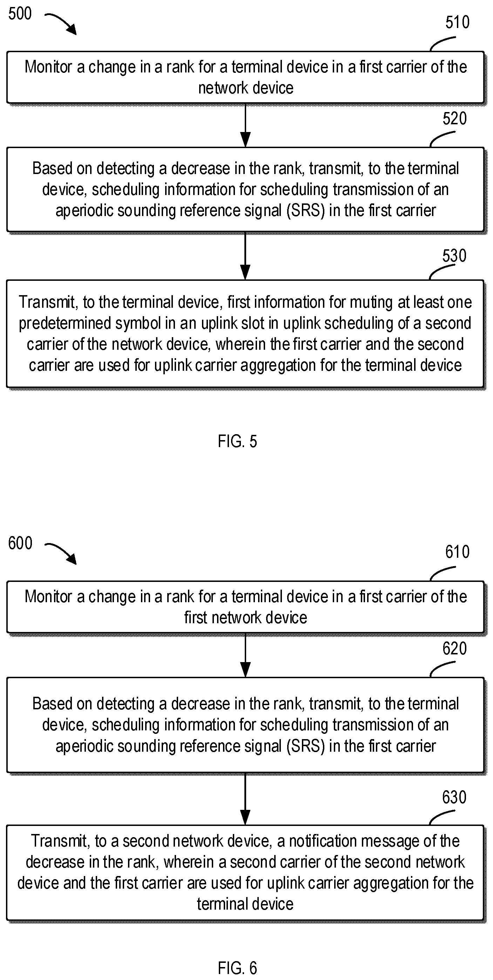

FIG. 5 illustrates a flowchart of an example method 500 implemented at a network device (e.g., the network device 120 shown in FIG. 1A) according to some embodiments of the present disclosure. For purposes of discussion, the method 500 will be described from the perspective of the network device 120 with reference to FIG. 1A.

As shown in FIG. 5, at block 510, the network device monitors a change in a rank for a terminal device in a first carrier of the network device. At block 520, based on detecting the decrease of the rank, the network device transmits, to the terminal device, scheduling information for scheduling the transmission of the aperiodic sounding reference signal (SRS) in the first carrier. At block 530, the network device transmits, to the terminal device, first information for muting at least one predetermined symbol in an uplink slot in uplink scheduling of the second carrier of the network device, wherein the first carrier and the second carrier are used for uplink carrier aggregation for the terminal device.

In some embodiments, the network device is further caused to: stop transmitting the scheduling information to the terminal device based on detecting the increase of the rank; and transmit, to the terminal device, second information for stopping muting the at least one predetermined symbol in the uplink slot in uplink scheduling of the second carrier.

In some embodiments, the network device is further caused to: based on detecting the rank change, a first unit of the network device associated with the first carrier transmits a notification message of the rank change to a second unit of the network device associated with the second carrier.

In some embodiments, the at least one predetermined symbol comprises symbols overlapping with a slot of a transmission of an aperiodic SRS in the first carrier.

In some embodiments, the terminal device does not support simultaneous transmission of the SRS with a physical uplink control channel (PUCCH) or a physical uplink shared channel (PUSCH); or the power of the band combination of the uplink carrier aggregation satisfies a predetermined magnitude relationship with the power of the band of the first carrier or the band of the second carrier.

In some embodiments, the scheduling information is transmitted after a predetermined time period following the determination of the decrease of the rank.

In some embodiments, the transmission of the aperiodic SRS is scheduled in a predetermined set of uplink slots of the first carrier.

In some embodiments, an uplink slot in the predetermined set of uplink slots overlaps with a latter half of an uplink slot in the second carrier, and the at least one predetermined symbol that is muted comprises a predetermined number of last symbols of the uplink slot of the second carrier.

In some embodiments, an uplink slot in the predetermined set of uplink slots overlaps with the front half of an uplink slot in the second carrier, and the at least one predetermined symbol that is muted includes all symbols of the uplink slot of the second carrier.

In some embodiments, the network device is caused to monitor a change in the rank by: detecting a decrease in the rank based on an uplink transmission of the terminal device in the first carrier; and detecting an increase in the rank based on a transmission of an aperiodic SRS of the terminal device in the first carrier.

In some embodiments, the first carrier comprises a time-division duplex (TDD) carrier, the second carrier comprises a frequency-division duplex (FDD) carrier, one of the first carrier or the second carrier corresponds to a primary cell of the terminal device, the other one of the first carrier or the second carrier corresponds to a secondary cell of the terminal device, and the terminal device has three transmit RF chains, or a combination of one or more of the above.

FIG. 6 illustrates a flowchart of an example method 600 implemented at a network device (e.g., the first network device 120-1 shown in FIG. 1B) according to some embodiments of the present disclosure. For purposes of discussion, the method 600 will be described from the perspective of the first network device 120-1 with reference to FIG. 1B.

As shown in FIG. 6, at block 610, the first network device monitors a change in a rank for the terminal device in a first carrier of the first network device. At block 620, based on detecting the decrease of the rank, the first network device transmits, to the terminal device, scheduling information for scheduling the transmission of the aperiodic sounding reference signal (SRS) in the first carrier. At block 630, the first network device transmits a notification message of the decrease of the rank to the second network device, wherein the second carrier of the second network device and the first carrier are used for uplink carrier aggregation for the terminal device.

In some embodiments, the first network device is further caused to: transmit a notification message of the increase of the rank to the second network device based on detecting the increase of the rank; and stop transmitting the scheduling information to the terminal device.

In some embodiments, the terminal device does not support simultaneous transmission of the SRS with the physical uplink control channel (PUCCH) or the physical uplink shared channel (PUSCH); or the power of the band combination of uplink carrier aggregation satisfies a predetermined magnitude relationship with the power of the band of the first carrier or the band of the second carrier.

In some embodiments, the scheduling information is transmitted after a predetermined time period following the determination of the decrease of the rank.

In some embodiments, the transmission of the aperiodic SRS is scheduled in a predetermined set of uplink slots of the first carrier.

In some embodiments, an uplink slot in the predetermined set of uplink slots overlaps with a latter half of an uplink slot in the second carrier or overlaps with a front half of the uplink slot in the second carrier.

In some embodiments, the first network device is caused to monitor a change in the rank by: detecting a decrease in the rank based on an uplink transmission of the terminal device in the first carrier; and detecting an increase in the rank based on a transmission of an acyclic SRS of the terminal device in the first carrier.

In some embodiments, the first carrier comprises a time-division duplex (TDD) carrier, the second carrier comprises a frequency-division duplex (FDD) carrier, one of the first carrier or the second carrier corresponds to a primary cell of the terminal device, the other one of the first carrier or the second carrier corresponds to a secondary cell of the terminal device, and the terminal device has three transmit RF chains, or a combination of one or more of the above.

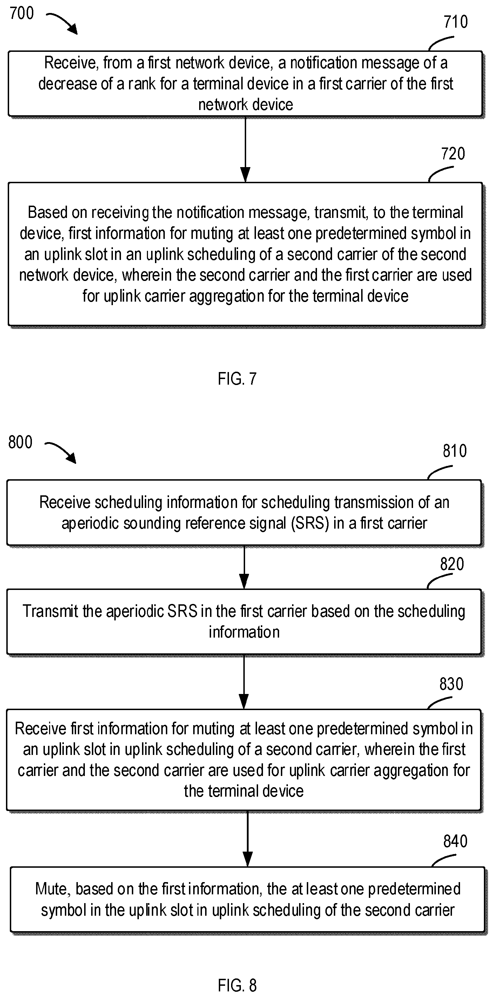

FIG. 7 illustrates a flowchart of an example method 700 implemented at a network device (e.g., the second network device 120-2 shown in FIG. 1B) according to some embodiments of the present disclosure. For purposes of discussion, the method 700 will be described from the perspective of the second network device 120-2 with reference to FIG. 1B.

As shown in FIG. 7, at block 710, the second network device receives, from the first network device, a notification message that a rank for the terminal device is decreased in a first carrier of the first network device. At block 720, based on receiving the notification message, the second network device transmits, to the terminal device, first information for muting at least one predetermined symbol in the uplink slots in uplink scheduling of the second carrier of the second network device, wherein the second carrier and the first carrier are used for uplink carrier aggregation for the terminal device.

In some embodiments, the second network device is further caused to: receive, from the first network device, a notification message of increase of the rank for the terminal device in the first carrier; and based on receiving the notification message of the increase of the rank, transmit, to the terminal device, second information for stopping muting the at least one predetermined symbol in the uplink slot in uplink scheduling of the second carrier.

In some embodiments, the at least one predetermined symbol comprises symbols overlapping with a slot of a transmission of an aperiodic sounding reference signal (SRS) in the first carrier.

In some embodiments, the terminal device does not support simultaneous transmission of the SRS with a physical uplink control channel (PUCCH) or a physical uplink shared channel (PUSCH); or the power of the band combination of the uplink carrier aggregation satisfies a predetermined magnitude relationship with the power of the band of the first carrier or the band of the second carrier.

In some embodiments, the transmission of the aperiodic SRS is scheduled in a predetermined set of uplink slots of the first carrier.

In some embodiments, an uplink slot in the predetermined set of uplink slots overlaps with a latter half of an uplink slot in the second carrier, and the at least one predetermined symbol that is muted includes a predetermined number of last symbols of the uplink slot in the second carrier.

In some embodiments, an uplink slot in the predetermined set of uplink slots overlaps with a front half of an uplink slot in the second carrier, and the at least one predetermined symbol that is muted includes all symbols of the uplink slot of the second carrier.

In some embodiments, the first carrier comprises a time-division duplex (TDD) carrier, the second carrier comprises a frequency-division duplex (FDD) carrier, one of the first carrier or the second carrier corresponds to a primary cell of the terminal device, the other one of the first carrier or the second carrier corresponds to a secondary cell of the terminal device, and the terminal device has three transmitting RF chains, or a combination of one or more of the above.

FIG. 8 illustrates a flowchart of an example method 800 implemented at a terminal device (e.g., the terminal device 110 shown in FIGS. 1A and 1B) according to some embodiments of the present disclosure. For purposes of discussion, the method 800 will be described from the perspective of the terminal device 110 with reference to FIGS. 1A and 1B.

As shown in FIG. 8, at block 810, scheduling information for scheduling transmission of an aperiodic sounding reference signal (SRS) in the first carrier is received at the terminal device side. At block 820, based on this scheduling information, the aperiodic SRS is transmitted in the first carrier. At block 830, first information is received, the first information is used for muting at least one predetermined symbol in an uplink slot in uplink scheduling of the second carrier, wherein the first carrier and the second carrier are used for uplink carrier aggregation for the terminal device. At block 840, based on the first information, the at least one predetermined symbol in the uplink slot is muted in uplink scheduling of the second carrier.

In some embodiments, the terminal device is further caused to: receive the second information, the second information being used to stop muting the at least one predetermined symbol in the uplink slot in uplink scheduling of the second carrier.

In some embodiments, the at least one predetermined symbol comprises symbols overlapping with a slot of a transmission of an aperiodic SRS in the first carrier.

In some embodiments, the terminal device does not support simultaneous transmission of the SRS with a physical uplink control channel (PUCCH) or a physical uplink shared channel (PUSCH); or the power of the band combination of the uplink carrier aggregation satisfies a predetermined magnitude relationship with the power of the band of the first carrier or the band of the second carrier.

In some embodiments, the transmission of the aperiodic SRS is scheduled in a predetermined set of uplink slots of the first carrier.

In some embodiments, an uplink slot in the predetermined set of uplink slots overlaps with a latter half of an uplink slot in the second carrier, and the at least one predetermined symbol that is muted includes a predetermined number of last symbols of the uplink slot of the second carrier.

In some embodiments, an uplink slot in the predetermined set of uplink slots overlaps with a front half of an uplink slot in the second carrier, and the at least one predetermined symbol that is muted includes all symbols of the uplink slot of the second carrier.

In some embodiments, the first carrier comprises a time-division duplex (TDD) carrier, the second carrier comprises a frequency-division duplex (FDD) carrier, one of the first carrier or the second carrier corresponds to a primary cell of the terminal device, the other one of the first carrier or the second carrier corresponds to a secondary cell of the terminal device, and the terminal device has three transmit RF chains, or a combination of one or more of the above.

In some embodiments, an apparatus capable of performing the method 500 (e.g., the network device 120 shown in FIG. 1A) may include means for performing the corresponding steps of the method 500. The means may be implemented in any suitable form. For example, the means may be implemented in circuitry or software modules.

In some embodiments, the apparatus includes: means for monitoring a change in a rank for a terminal device in a first carrier of a network device; means for transmitting, to the terminal device, scheduling information for scheduling transmission of an aperiodic sounding reference signal (SRS) in the first carrier based on detecting a decrease in the rank; and means for transmitting, to the terminal device, first information for muting at least one predetermined symbol in an uplink slot in uplink scheduling of a second carrier of the network device, wherein the first carrier and the second carrier are used for uplink carrier aggregation for the terminal device.

In some embodiments, the apparatus further comprises: means for stopping transmitting the scheduling information to the terminal device based on detecting an increase in the rank; and means for transmitting, to the terminal device, second information for stopping muting the at least one predetermined symbol in the uplink slot in uplink scheduling of the second carrier.

In some embodiments, the apparatus further comprises: means for transmitting a notification message of the change in rank by a first unit of the network device associated with the first carrier to a second unit of the network device associated with the second carrier, based on detecting the change in rank.

In some embodiments, the at least one predetermined symbol comprises symbols overlapping with a slot of a transmission of the aperiodic SRS in the first carrier.

In some embodiments, the terminal device does not support simultaneous transmission of the SRS with a physical uplink control channel (PUCCH) or a physical uplink shared channel (PUSCH); or the power of the band combination of the uplink carrier aggregation satisfies a predetermined magnitude relationship with the power of the band of the first carrier or the band of the second carrier.

In some embodiments, the scheduling information is transmitted after a predetermined time period following the determination of the decrease of the rank.

In some embodiments, the transmission of the aperiodic SRS is scheduled in a predetermined set of uplink slots of the first carrier.

In some embodiments, an uplink slot in the predetermined set of uplink slots overlaps with a latter half of an uplink slot in the second carrier, and the at least one predetermined symbol that is muted includes a predetermined number of last symbols of the uplink slot of the second carrier.

In some embodiments, an uplink slot in the predetermined set of uplink slots overlaps with a front half of an uplink slot in the second carrier, and the at least one predetermined symbol that is muted includes all symbols of the uplink slot of the second carrier.

In some embodiments, the means for monitoring a change in rank include: means for detecting a decrease in rank based on an uplink transmission of the terminal device in the first carrier; and means for detecting an increase in rank based on a transmission of an aperiodic SRS of the terminal device in the first carrier.

In some embodiments, the first carrier comprises a time-division duplex (TDD) carrier, the second carrier comprises a frequency-division duplex (FDD) carrier, one of the first carrier or the second carrier corresponds to a primary cell of the terminal device, the other one of the first carrier or the second carrier corresponds to a secondary cell of the terminal device, and the terminal device has three transmit RF chains, or a combination of one or more of the above.

In some embodiments, the apparatus further includes means for performing other steps of some embodiments of the method 500. In some embodiments, the means include at least one processor and at least one memory including computer program code, the at least one memory and the computer program code being configured to, in conjunction with the at least one processor, cause execution of the apparatus.

In some embodiments, an apparatus capable of executing the method 600 (e.g., the first network device 120-1 shown in FIG. 1B) may include means for executing corresponding steps of the method 600. The means may be implemented in any suitable form. For example, the means may be implemented in circuitry or software modules.

In some embodiments, the apparatus includes: means for monitoring a change in a rank for a terminal device in a first carrier of a first network device; means for transmitting, to the terminal device, scheduling information for scheduling transmission of an aperiodic sounding reference signal (SRS) in the first carrier based on detecting a decrease in the rank; and means for transmitting, to a second network device, a notification message of the decrease in the rank, wherein the second carrier of the second network device and the first carrier are used for uplink carrier aggregation for the terminal device.

In some embodiments, the apparatus further comprises: means for transmitting a notification message of an increase in rank to the second network device based on detecting the increase in rank; and means for stopping transmitting the scheduling information to the terminal device.

In some embodiments, the terminal device does not support simultaneous transmission of the SRS with a physical uplink control channel (PUCCH) or a physical uplink shared channel (PUSCH); or the power of band combination of uplink carrier aggregation satisfies a predetermined magnitude relationship with the power of a band of the first carrier or a band of the second carrier.

In some embodiments, the scheduling information is transmitted after a predetermined time period following the determination of the decrease of the rank.

In some embodiments, the transmission of the aperiodic SRS is scheduled in a predetermined set of uplink slots of the first carrier.

In some embodiments, an uplink slot in the predetermined set of uplink slots overlaps with a latter half of an uplink slot in the second carrier or overlaps with a front half of the uplink slot in the second carrier.

In some embodiments, the means for monitoring a change in rank include: means for detecting a decrease in rank based on an uplink transmission of the terminal device in the first carrier; and means for detecting an increase in rank based on a transmission of the aperiodic SRS of the terminal device in the first carrier.

In some embodiments, the first carrier comprises a time-division duplex (TDD) carrier, the second carrier comprises a frequency-division duplex (FDD) carrier, one of the first carrier or the second carrier corresponds to a primary cell of the terminal device, the other one of the first carrier or the second carrier corresponds to a secondary cell of the terminal device, and the terminal device has three transmit RF chains, or a combination of one or more of the above.

In some embodiments, the apparatus further comprises means for performing other steps of some embodiments of method 600. In some embodiments, the means include at least one processor and at least one memory including computer program code, the at least one memory and the computer program code being configured to, in conjunction with the at least one processor, cause execution of the apparatus.

In some embodiments, an apparatus capable of executing the method 700 (e.g., the second network device 120-2 shown in FIG. 1B) may include means for executing corresponding steps of the method 700. The means may be implemented in any suitable form. For example, the means may be implemented in circuitry or software modules.

In some embodiments, the apparatus includes: means for receiving, from a first network device, a notification message of a decrease of a rank for a terminal device in a first carrier of the first network device; and means for transmitting, to the terminal device, first information for muting at least one predetermined symbol in an uplink slot in uplink scheduling of a second carrier of the second network device based on receiving the notification message, wherein the second carrier and the first carrier are used for uplink carrier aggregation for the terminal device.

In some embodiments, the apparatus further comprises: means for receiving, from the first network device, a notification message of an increase in the rank for the terminal device in the first carrier; and means for transmitting, to the terminal device, second information for stopping muting the at least one predetermined symbol in the uplink slot in uplink scheduling of the second carrier based on receiving the notification message of the increase of the rank.

In some embodiments, the at least one predetermined symbol comprises symbols overlapping with a slot of a transmission of an aperiodic sounding reference signal (SRS) in the first carrier.

In some embodiments, the terminal device does not support simultaneous transmission of the SRS with a physical uplink control channel (PUCCH) or a physical uplink shared channel (PUSCH); or the power of band combination of uplink carrier aggregation satisfies a predetermined magnitude relationship with the power of the band of the first carrier or the band of the second carrier.

In some embodiments, the transmission of the aperiodic SRS is scheduled in a predetermined set of uplink slots of the first carrier.

In some embodiments, an uplink slot in the predetermined set of uplink slots overlaps with a latter half of an uplink slot in the second carrier, and the at least one predetermined symbol that is muted includes a predetermined number of last symbols of the uplink slot of the second carrier.

In some embodiments, an uplink slot in the predetermined set of uplink slots overlaps with a front half of an uplink slot in the second carrier, and the at least one predetermined symbol that is muted includes all symbols of the uplink slot of the second carrier.

In some embodiments, the first carrier comprises a time division duplex (TDD) carrier, the second carrier comprises a frequency division duplex (FDD) carrier, one of the first carrier or the second carrier corresponds to a primary cell of the terminal device, the other one of the first carrier or the second carrier corresponds to a secondary cell of the terminal device, and the terminal device has three transmit RF chains, or a combination of one or more of the above.

In some embodiments, the apparatus further comprises means for performing other steps of some embodiments of the method 700. In some embodiments, the means include at least one processor and at least one memory including computer program code, the at least one memory and the computer program code being configured to, in conjunction with the at least one processor, cause execution of the apparatus.

In some embodiments, an apparatus capable of executing the method 800 (e.g., the terminal device 110 shown in FIGS. 1A and 1B) may include means for executing corresponding steps of the method 800. The means may be implemented in any suitable form. For example, the means may be implemented in circuitry or software modules.

In some embodiments, the apparatus comprises: means for receiving, at a terminal device side, scheduling information for scheduling transmission of an aperiodic sounding reference signal (SRS) in a first carrier; means for transmitting the aperiodic SRS in the first carrier based on the scheduling information; means for receiving first information for muting at least one predetermined symbol in an uplink slot in uplink scheduling of the second carrier, wherein the first carrier and the second carrier are used for uplink carrier aggregation for the terminal device; and means for muting, based on the first information, the at least one predetermined symbol in the uplink slot in uplink scheduling of the second carrier.

In some embodiments, the apparatus further comprises: means for receiving second information for stopping muting the at least one predetermined symbol in the uplink slot in uplink scheduling of the second carrier.

In some embodiments, the at least one predetermined symbol comprises symbols overlapping with a slot of a transmission of an aperiodic SRS in the first carrier.

In some embodiments, the terminal device does not support simultaneous transmission of the SRS with a physical uplink control channel (PUCCH) or a physical uplink shared channel (PUSCH); or the power of the band combination of uplink carrier aggregation satisfies a predetermined magnitude relationship with the power of the band of the first carrier or the band of the second carrier.

In some embodiments, the transmission of the aperiodic SRS is scheduled in a predetermined set of uplink slots of the first carrier.

In some embodiments, an uplink slot in the predetermined set of uplink slots overlaps with a latter half of an uplink slot in the second carrier, and the at least one predetermined symbol that is muted includes a predetermined number of last symbols of the uplink slot of the second carrier.

In some embodiments, an uplink slot in the predetermined set of uplink slots overlaps with a front half of an uplink slot in the second carrier, and the at least one predetermined symbol that is muted includes all symbols of the uplink slot of the second carrier.

In some embodiments, the first carrier comprises a time division duplex (TDD) carrier, the second carrier comprises a frequency division duplex (FDD) carrier, one of the first carrier or the second carrier corresponds to a primary cell of the terminal device, the other one of the first carrier or the second carrier corresponds to a secondary cell of the terminal device, and the terminal device has three transmit RF chains, or a combination of one or more of the above.

In some embodiments, the apparatus further comprises means for performing other steps of some embodiments of the method 800. In some embodiments, the means include at least one processor and at least one memory including computer program code, the at least one memory and the computer program code being configured to, in conjunction with the at least one processor, cause execution of the apparatus.

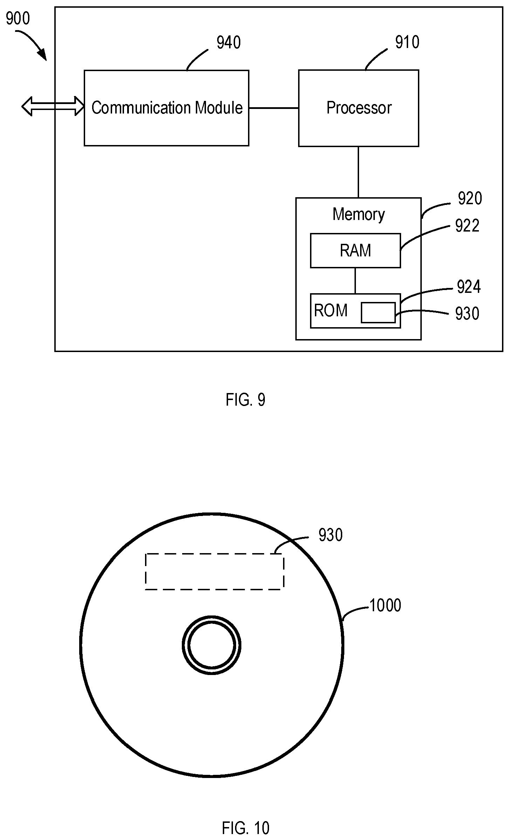

FIG. 9 illustrates a simplified block diagram of a device 900 suitable for implementing some example embodiments of the present disclosure. The device 900 may be provided to implement a communication device, such as, for example, the network device 120, the first network device 120-1, the second network device 120-2, or the terminal device 110 as shown in FIGS. 1A through 1B. As shown, the device 900 includes one or more processors 910, one or more storage 920 coupled to the processors 910, and one or more communication modules 940 coupled to the processors 910.

The communication module 940 is used for bidirectional communication. The communication module 940 has at least one antenna to facilitate communication. The communication interface may represent any interface required for communication with other network elements.

The processor 910 may be of any type suitable to the local technical network and may include one or more of the following: general purpose computers, special purpose computers, microprocessors, digital signal processors, and processors based on multi-core processor architecture, as non-limiting examples. The device 900 may have multiple processors, such as an application specific integrated circuit chip that is slaved in time to a clock which synchronizes the main processor.

The memory 920 may include one or more non-volatile memories, and one or more volatile memories. Examples of non-volatile memory include, but are not limited to, read-only memory (ROM) 924, electrically programmable read-only memory, flash memory, hard disks, optical disks, digital video disks, and other magnetic and/or optical storage. Examples of volatile memory include, but are not limited to, random access memory (RAM) 922, and other volatile memory that does not persist for the duration of a power failure.

The computer program 930 includes computer-executable instructions executed by the associated processor 910. Program 930 may be stored in read-only memory 924. Processor 910 may perform any suitable actions and processing by loading program 930 into RAM 922.

Embodiments of the present disclosure may be implemented by program 930 such that the device 900 may perform any of the processes of the present disclosure discussed with reference to FIGS. 5 through 8. Embodiments of the present disclosure may also be realized through hardware, or a combination of software and hardware.

In some example embodiments, the program 930 may be tangibly embodied in a computer-readable medium, which may be contained in a device 900 (e.g., memory 920), or other storage device accessible to the device 900. The device 900 may load the program 930 from the computer-readable medium into RAM 922 for execution. The computer-readable medium may include any type of tangible non-volatile storage, such as read-only memory, programmable read-only memory, flash memory, hard disk, optical disk, DVD, and the like.

FIG. 10 illustrates a block diagram of an example of a computer-readable medium 1000 according to some example embodiments of the present disclosure. The computer readable medium 1000 has a program 930 stored on it. Note that although the computer-readable medium 1000 is illustrated in FIG. 10 in the form of a CD or DVD, the computer-readable medium 1000 may be in any other form suitable for carrying or storing the program 930.

In general, various embodiments of the present disclosure may be implemented in hardware or specialized circuitry, software, logic, or any combination thereof. Some aspects may be implemented in hardware, while other aspects may be implemented in firmware or software executable by a controller, a microprocessor, or other computing device. Although aspects of embodiments of the present disclosure are shown and described as block diagrams, flowcharts, or using some other graphical representation, it should be understood that, as a non-limiting example, the blocks, devices, systems, techniques, or methods described herein may be implemented in hardware, software, firmware, specialized circuitry or logic, general-purpose hardware or controllers, or other computing devices, or some combination thereof.

The present disclosure also provides at least one computer program product tangibly stored on a non-transient computer-readable storage medium. The computer program product includes computer-executable instructions (such as instructions contained in a program module) executed in a device on a target real or virtual processor to perform the methods 500, 600, 700, 800 described above with reference to FIGS. 5 through 8. Typically, a program module includes routines, programs, libraries, objects, classes, components, data structures, and the like that perform a particular task or implement a particular abstract data type. In various embodiments, the functionality of a program module may be combined or split between program modules as desired. The machine-executable instructions of the program modules may be executed locally or in a distributed device. In a distributed device, the program modules may be located in both local and remote storage media.

Program code for performing the methods of the present disclosure may be written in any combination of one or more programming languages. The program code may be provided to a processor or controller of a general-purpose computer, a special-purpose computer, or other programmable data-processing device such that the program code, when executed by the processor or controller, enables the functions/operations specified in the flowchart and/or block diagram. The program code may be executed entirely on the machine, partially on the machine, partially on the machine as a stand-alone software package and partially on a remote machine, or entirely on a remote machine or server.

In the context of the present disclosure, computer program code or related data may be carried by any suitable carrier to enable an apparatus, device, or processor to perform various processes and operations as described above. Examples of carriers include signals, computer-readable media, and the like.

A computer-readable medium may be a computer-readable signal medium or a computer-readable storage medium. The computer-readable medium may include, but is not limited to, electronic, magnetic, optical, electromagnetic, infrared, or semiconductor systems, devices, or apparatus, or any suitable combination of the foregoing. More specific examples of computer-readable storage media include electrical connections having one or more wires, portable computer disks, hard disks, random access memory (RAM), read-only memory (ROM), erasable programmable read-only memory (EPROM or flash memory), optical fibers, portable compact disc read-only memory (CD-ROM), optical storage devices, magnetic storage devices, or any suitable combination of the foregoing. The term "non-transient" as used herein is a limitation on the medium itself (i.e., tangible, not signal), and not a limitation on data storage persistence (e.g., random-access memory versus read-only memory).

Furthermore, although operations are described in a particular order, this should not be construed as requiring that such operations be performed in the particular order or sequence shown, or requiring that all of the operations shown be performed, in order to achieve a desired result. In some cases, multitasking and parallel processing may be advantageous. Similarly, while the foregoing discussion contains several specific implementation details, these details should not be construed as limitations on the scope of the present disclosure, but rather as descriptions of features that may be specific to particular embodiments. Certain features described in the context of separate embodiments may also be implemented in combination in a single embodiment. Conversely, the various features described in the context of a single embodiment may also be implemented individually, or in any suitable sub-combination, in multiple embodiments.

Although the present disclosure is described in language specific to structural features and/or method actions, it should be understood that the present disclosure as defined in the appended claims need not be limited to the specific features or actions described above. Rather, the specific features and actions described above are disclosed as exemplary forms of implementing the claims.

## Claims

1. A network device comprising:
at least one processor; and
at least one memory storing instructions that, when executed by the at least one processor, cause the network device at least to:
monitor a change in a rank for a terminal device in a first carrier of the network device;
based on detecting a decrease in the rank, transmit, to the terminal device, scheduling information for scheduling transmission of an aperiodic sounding reference signal (SRS) in the first carrier; and
transmit, to the terminal device, first information for muting at least one predetermined symbol in an uplink slot in uplink scheduling of a second carrier of the network device, wherein the first carrier and the second carrier are used for uplink carrier aggregation for the terminal device.

2. The network device of claim 1, wherein the network device is further caused to:
stop transmitting the scheduling information to the terminal device based on detecting an increase in the rank; and
transmit, to the terminal device, second information for stopping muting the at least one predetermined symbol in the uplink slot in uplink scheduling of the second carrier.

3. The network device of any of claims 1 to 2, wherein the at least one predetermined symbol comprises at least one symbol overlapping with a slot of transmission of the aperiodic SRS in the first carrier.

4. The network device of any of claims 1 to 3, wherein:
the terminal device does not support simultaneous transmission of SRS with a physical uplink control channel (PUCCH) or a physical uplink shared channel (PUSCH); or
power of a band combination of the uplink carrier aggregation satisfies a predetermined magnitude relationship with power of a band of the first carrier or a band of the second carrier.

5. The network device of any of claims 1 to 4, wherein the transmission of the aperiodic SRS is scheduled in a predetermined set of uplink slots of the first carrier.

6. The network device of any of claims 1 to 5, wherein the network device is caused to monitor the change in the rank by:
monitoring a decrease in the rank based on uplink transmission of the terminal device in the first carrier; and
monitoring an increase in the rank based on transmission of the aperiodic SRS of the terminal device in the first carrier.

7. A first network device comprising:
at least one processor; and
at least one memory storing instructions that, when executed by the at least one processor, cause the first network device at least to:
monitor a change in a rank for a terminal device in a first carrier of the first network device;
based on detecting a decrease in the rank, transmit, to the terminal device, scheduling information for scheduling transmission of an aperiodic sounding reference signal (SRS) in the first carrier; and
transmit, to a second network device, a notification message of the decrease in the rank, wherein a second carrier of the second network device and the first carrier are used for uplink carrier aggregation for the terminal device.

8. A second network device comprising:
at least one processor; and
at least one memory storing instructions that, when executed by the at least one processor, cause the second network device at least to:
receive, from a first network device, a notification message of a decrease of a rank for a terminal device in a first carrier of the first network device; and
based on receiving the notification message, transmit, to the terminal device, first information for muting at least one predetermined symbol in an uplink slot in an uplink scheduling of a second carrier of the second network device, wherein the second carrier and the first carrier are used for uplink carrier aggregation for the terminal device.

9. The second network device of claim 8, wherein the second network device is further caused to:
receive, from the first network device, a notification message of an increase in the rank for the terminal device in the first carrier; and
based on receiving the notification message of the increase in the rank, transmit, to the terminal device, second information for stopping muting the at least one predetermined symbol in the uplink slot in uplink scheduling of the second carrier.

10. The second network device of claim 8 or 9, wherein the at least one predetermined symbol comprises at least one symbol overlapping with a slot of transmission of an aperiodic sounding reference signal (SRS) in the first carrier.

11. A terminal device comprising:
at least one processor; and
at least one memory storing instructions that, when executed by the at least one processor, cause the terminal device at least to:
receive scheduling information for scheduling transmission of an aperiodic sounding reference signal (SRS) in a first carrier;
transmit the aperiodic SRS in the first carrier based on the scheduling information;
receive first information for muting at least one predetermined symbol in an uplink slot in uplink scheduling of a second carrier, wherein the first carrier and the second carrier are used for uplink carrier aggregation for the terminal device; and
mute, based on the first information, the at least one predetermined symbol in the uplink slot in uplink scheduling of the second carrier.

12. The terminal device of claim 11, wherein the terminal device is further caused to:
receive second information for stopping muting the at least one predetermined symbol in the uplink slot in uplink scheduling of the second carrier.

13. A method, comprising:
monitoring a change in a rank for a terminal device in a first carrier of the network device;
based on detecting a decrease in the rank, transmitting, to the terminal device, scheduling information for scheduling transmission of an aperiodic sounding reference signal (SRS) in the first carrier; and
transmitting, to the terminal device, first information for muting at least one predetermined symbol in an uplink slot in uplink scheduling of a second carrier of the network device, wherein the first carrier and the second carrier are used for uplink carrier aggregation for the terminal device.

14. A method, comprising:
receiving scheduling information for scheduling transmission of an aperiodic sounding reference signal (SRS) in a first carrier;
transmitting the aperiodic SRS in the first carrier based on the scheduling information;
receiving first information for muting at least one predetermined symbol in an uplink slot in uplink scheduling of a second carrier, wherein the first carrier and the second carrier are used for uplink carrier aggregation for a terminal device; and
muting, based on the first information, the at least one predetermined symbol in the uplink slot in uplink scheduling of the second carrier.

15. A computer-readable medium comprising program instructions stored thereon, the program instructions for performing at least the method of claim 13 or 14.
